# EUROPEAN PATENT SPECIFICATION

(11) **EP 3 083 339 B1**
(45) Date of publication and mention of the grant of the patent: **16.10.2019**
(21) Application number: 14871760.6
(22) Date of filing: 19.12.2014
(51) Int. Cl.: B60R 25/021

(54) **ELECTRONIC LOCK UNIT FOR A VEHICLE**
ELEKTRONISCHE SCHLOSSEINHEIT FÜR EIN FAHRZEUG
SERRURE ELECTRONIQUE POUR UNE VOITURE

(30) Priority: 19.12.2013 IN 3655DE2013
(43) Date of publication of application: 26.10.2016
(73) Proprietor: Minda Corporation Limited, 201 301 Noida Uttar Pradesh (IN)
(72) Inventor: VARSHNEY, Diwakar, Uttar Pradesh 201301 (IN); GOSWAMI, Deepak, Uttar Pradesh 201301 (IN); VERMA, Sumeet, Uttar Pradesh 201301 (IN); PURI, Vikram, Uttar Pradesh 201301 (IN); SINGH, Harjit, Uttar Pradesh 201301 (IN); ADHIKARI, Neeraj, Uttar Pradesh 201301 (IN)
(74) Representative: Witte, Weller & Partner Patentanwälte mbB
(86) International application number: PCT/IB2014/067115
(87) International publication number: WO 2015/092754

(56) References cited:
- DE-A1- 2 713 381
- DE-A1- 2 713 381
- JP-A- S62 231 853
- US-A- 5 442 943
- US-A1- 2003 231 100

## Description

The present invention generally relates to the field of vehicles. More specifically, the present invention relates to a multilevel authentication based electronic lock unit for vehicles.

Conventionally it is known that, steering LOCK/UNLOCK of a vehicle and turning ON/OFF of the ignition of the vehicle requires a mechanical key. More specifically, a user has to insert, push and rotate the mechanical key in the cylindrical lock to UNLOCK the steering and turn ON the ignition. Similarly, the user has to rotate the mechanical key from the lock to turn OFF the ignition and LOCK the steering.

The conventional technique of using a mechanical key has a number of disadvantages. One of disadvantages of using a mechanical key is that it is cumbersome for the user to take out the key and insert the key in the lock every time the vehicle is to be used.

Another disadvantage is that, mechanical keys are prone to wear and tear i.e. continuous and excessive use of such keys leads to damage of the profile on the keys, under which condition the user has to get a new key made again.

Yet another disadvantage is that, many users have a tendency of forgetting the key in the lock which may lead to the theft of the vehicle. Moreover, mechanical keys can be copied easily which again increases the chances of theft of the vehicle. Several attempts have been made to provide an anti-theft/security device/system for vehicles. In the known security systems for vehicles are mostly mechanical systems, such as chains or metal wires used for the moving parts. It is known to secure the vehicles against unauthorized driving away, in that the wheels are connected to a fixed stop.

Further, many sophisticated electrical/electronic systems have been developed for preventing the theft of the vehicles. From US 2003/0231100 A1 an electronic lock unit for a vehicle is known that comprises an electronic control unit communicating with an electronic key by receiving ID codes transmitted by the electronic key and comparing the received ID codes with ID codes stored in the electronic control unit for determining electronically, whether a user is an authorized user to then enable the user to unlock the steering at a first level of authentication and to enable the user to start the vehicle at a second level of authentication.

However, the known systems are either costly or have a complex arrangement and their installation is very expensive.

Thus, there always existed a need in the art to provide an alternative technique that overcomes the above mentioned disadvantages.

In view of this it is an object of the present invention is to provide a multilevel authentication based electronic lock unit for a vehicle which provides prevention from theft, which is user friendly and inexpensive to install.

This object is solved by an electronic lock according to claim 1. Further embodiments are subject of the dependent claims.

The present invention relates to a multilevel authentication based electronic lock unit for a vehicle, said lock unit working in conjunction with an electronic control unit, the lock unit comprising: a first switch operatively coupled to the electronic control unit for initiating first level of authentication; a rotor having a top end, a bottom end and at least two sideward protruding arms which are spaced apart; a knob rigidly fixed to the top end of the rotor for facilitating steering LOCK/UNLOCK and ignition ON/OFF of the vehicle; a ring having at least two plates protruding from inner circumference of the ring, the plates being spaced apart so as to form a slot between any two adjacent plates to allow the rotor and its protruding arms to pass through; the bottom side of each plate being provided with projections to engage the arms of the rotor within the said projections; a cam unit comprising: a cylindrical body which mates with the bottom end of the rotor; and a cam element rigidly connected to the cylindrical body; a movable stopper positioned between the bottom end of the rotor and the cylindrical body for separating the rotor from the cam unit; and a second switch operatively coupled to the electronic control unit and being actuated by the movement of the cam element for initiating second level of authentication.

In the above paragraphs the most important features of the invention have been outlined, in order that the detailed description thereof that follows may be better understood and in order that the present contribution to the art may be better understood and in order that the present contribution to the art may be better appreciated. There are, of course, additional features of the invention that will be described hereinafter and which will form the subject of the claims appended hereto. Those skilled in the art will appreciate that the conception upon which this disclosure is based may readily be utilized as a basis for the designing of other structures for carrying out the several purposes of the invention.

Further aspects and advantages of the present invention will be readily understood from the following detailed description with reference to the accompanying drawings. The figures together with the detailed description below, are incorporated in and form part of the specification, and serve to further illustrate the aspects/embodiments and explain various principles and advantages, in accordance with the present invention wherein:
Figure 1 illustrates the perspective view of the electronic lock unit according to an embodiment of the present invention;
Figure 2 illustrates the exploded view of the electronic lock unit according to an embodiment of the present invention;
Figure 3 illustrates the housing of the electronic lock unit according to an embodiment of the present invention;
Figure 4 illustrates the cover of the electronic lock unit according to an embodiment of the present invention;
Figure 5 illustrates the rotor-knob assembly of the electronic lock unit according to an embodiment of the present invention;
Figure 6 illustrates the ring of the electronic lock unit according to an embodiment of the present invention;
Figure 7 illustrates the cam unit of the electronic lock unit according to an embodiment of the present invention;
Figure 8 illustrates the cam follower of the electronic lock unit according to an embodiment of the present invention;
Figures 9, 10, 11 and 12 illustrate the cross-sectional views of the electronic lock unit according to an embodiment of the present invention;
Figure 13 illustrates the block diagram of the electronic system of the electronic lock unit according to an embodiment of the present invention; and
Figure 14 illustrates the electronic key according to an embodiment of the present invention.
Skilled artisans will appreciate that elements in the drawings are illustrated for simplicity and have not necessarily been drawn to scale. For example, the dimensions of some of the elements in the drawings may be exaggerated relative to other elements to help to improve understanding of aspects of the present invention.
In order that the invention may be readily understood and put into practical effect, reference will now be made to exemplary embodiments as illustrated with reference to the accompanying drawings. The figures together with a detailed description below, are incorporated in and form part of the specification, and serve to further illustrate the embodiments and explain various principles and advantages.

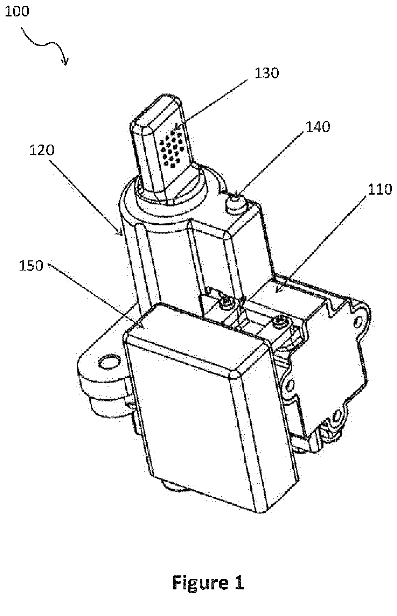

The following paragraphs describe the present invention with reference to figures 1-13. In the following description well known functions or constructions are not described in detail since they would obscure the description with unnecessary detail.
Referring now to the drawings, there is shown an illustrative embodiment of the multilevel authentication based electronic lock unit according to the present invention. It should be understood that the invention is susceptible to various modifications and alternative forms; specific embodiments thereof have been shown by way of example in the drawings and will be described in detail below.
Figure 1, illustrates the perspective view of the multilevel authentication based electronic or electro-mechanical lock unit (100) for a vehicle according to an embodiment of the present invention.
As shown in figure 1, the electronic lock unit (100) comprises of a housing (110) for accommodating various elements/components of the lock unit (100), cover (120) for casing/covering the top surface of the housing (110), a knob (130) for operating the lock unit (100) for facilitating steering LOCK/UNLOCK and ignition ON/OFF of the vehicle, a first switch (140) for initiating the multilevel authentication and an electronic control unit (ECU) (150) for facilitating the multilevel authentication.

In other words, the electronic lock unit (100) according to the present invention works in conjunction with the electronic control unit (150) for facilitating multilevel authentication.

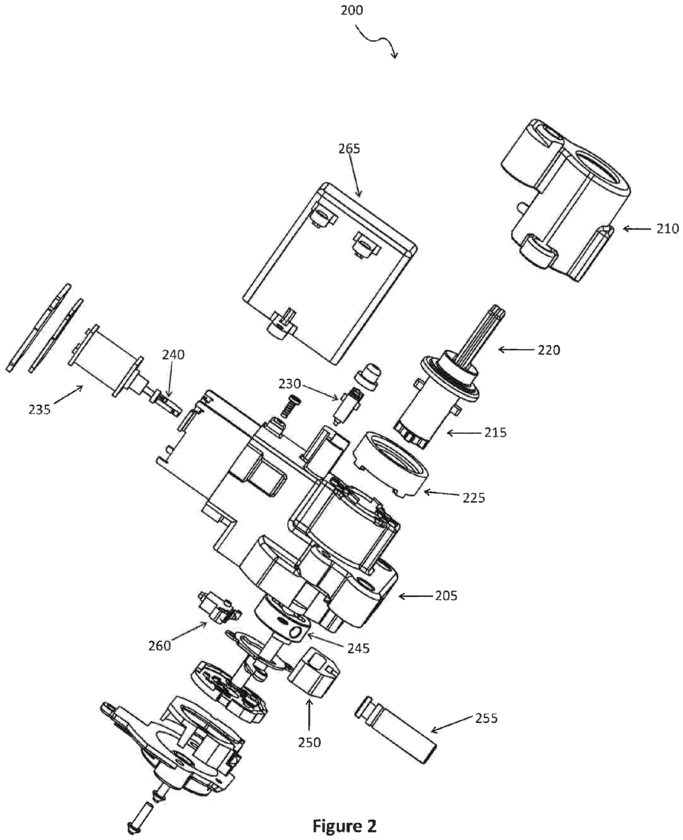

It is to be noted that, all components of the lock unit (100) are not illustrated in figure 1 and will be described with reference to figure 2 which illustrates the exploded view of the lock unit (100).

In the embodiment of figure 1, the cover (120) has a circular opening for the allowing the knob (130) to pass through and the first switch (140) is placed in a slot provided in the cover (120) next to the circular opening. It is to be noted that, the first switch (140) can be located at any suitable place on the steering of the vehicle.

Also, in the embodiment of figure 1, the ECU (150) is attached to the housing (110) of the lock unit (100). It is to be noted that, the ECU (150) can be located at any place in the vehicle and coupled with the electronic lock unit (100).

Figure 2, illustrates the exploded view of the multilevel authentication based electronic lock unit according to an embodiment of the present invention.

As shown in figure 2, the electronic lock unit (200) comprises of the following elements/components: housing (205), cover (210), rotor (215), knob (220), ring (225), first switch (230), actuator unit (235), movable stopper (240), cam unit (245), cam follower (250), locking bar (255) and second micro switch (260).

The first switch (230) may be positioned on the housing (205) or at any place on the steering of the vehicle. The first switch (230) is actuated by the user and initiates first level of authentication. The second switch (260) is positioned inside the housing (205) and is actuated by the movement of the cam unit (245). The second switch (260) initiates second level of authentication. The first and second switches (230, 260) are operatively coupled to an electric control unit (ECU) (265) which facilitates the first and second levels of authentication.

The housing (205) is provided with an opening on its top surface for encompassing the rotor (215). The ring (225) rests on the top surface of the housing (205) and allows the rotor (215) to pass through in the opening of the housing (205). The cover (210) provides a casing/covering to the top surface of the housing (205) such that the ring (225) is sandwiched between the top surface of the housing (205) and the cover (210).

The housing (205) is also provided with an opening on its bottom surface for encompassing the cam unit (245), cam follower (250), locking bar (255), second micro switch (260) and movable stopper (240).

The movable stopper (240) is provided between the bottom surface of the rotor (215) and the cam unit (245) for separating the rotor (215) from the cam unit (245). The movable stopper (240) is connected to the actuating unit (235) which enables the push-pull movement of the stopper (240). The pull movement of the movable stopper (240) causes engagement of the rotor (215) with the cam unit (245).

More specifically, the actuator unit (235) comprises of a plunger (270) whose one end is connected to the movable stopper (240) and whose other end is connected to a spring means. In this embodiment, the plunger (270) is surrounded with coils. The coils when energized enables the plunger (270) to move backwards thereby allowing engagement of the rotor (215) with the cam unit (245). Also, when the coils are dis-energized the plunger (270) is pushed by the spring force.

The cam follower (250) is coupled to the cam unit (245) and follows the movement of the cam unit (245). The cam unit (245) comprises of a cylindrical body and a cam element rigidly fixed to the cylindrical body. The cam follower (250) accommodates the cam element and moves to and fro in response to the movement of the cam element. The second switch (260) is positioned inside the housing (205) and is actuated by the movement of the cam element.

The locking bar/member (255) is coupled to the cam follower (250). More specifically, the locking bar (255) has its one end connected to the cam follower (250) and moves with the movement of the cam follower (250). The locking bar moves to and fro with the movement of the cam follower to engage/disengage with the steering of the vehicle.

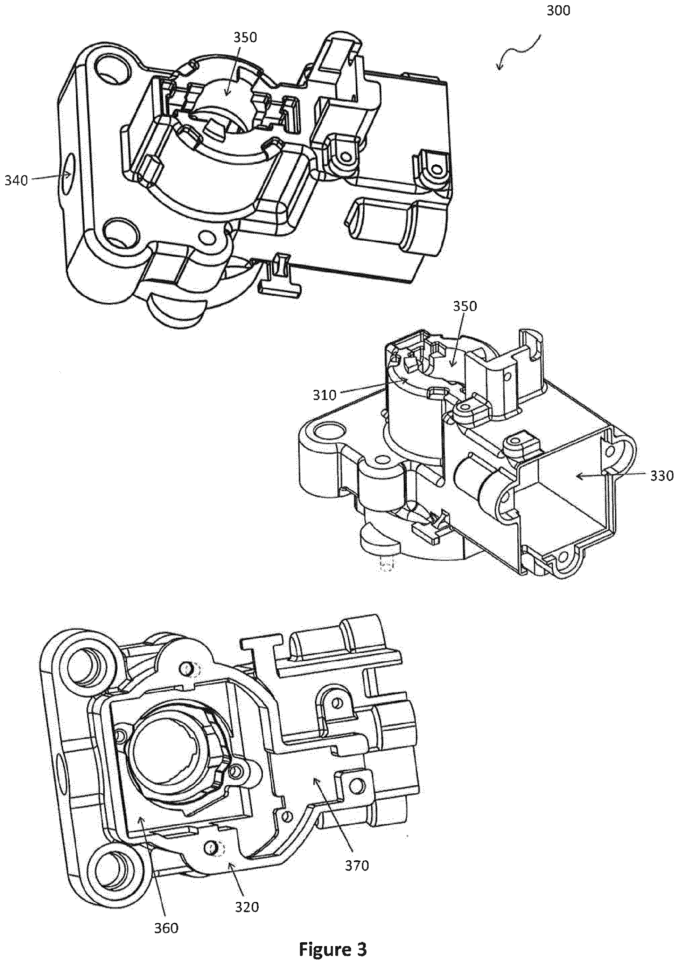

Figure 3, shows the housing of the electronic lock unit according to an embodiment of the present invention.

The housing (300) shown in figure 3 comprises of a top surface (310), a bottom surface (320), a chamber (330) on one side and a hole (340) on the other side. It can be noticed from figure 3, each of the top and bottom surfaces of the housing (300) is provided with an opening. The top surface (310) has an opening (350) and the bottom surface (320) has an opening (360).

The chamber (330) accommodates the actuation unit (235) and the hole (340) allows the locking bar (255) to move to and fro for engaging/disengaging with the steering.

Further, the corner (370) of the bottom surface (320) of the housing (300) accommodates the second switch.

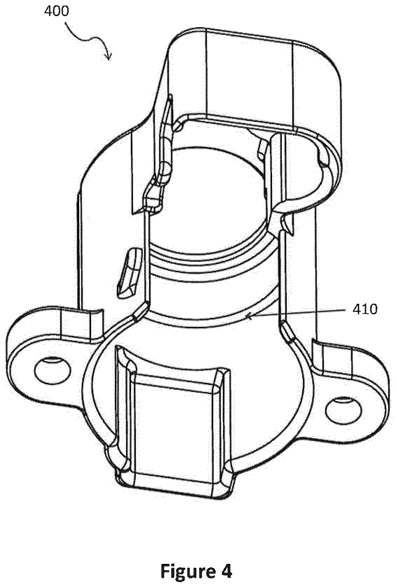

Figure 4, shows the cover that cases the top surface of the housing according to an embodiment of the present invention.

The cover (400) shown in figure 4 is used to provide a covering/casing to the top surface of the housing. The cover (400) is provided with a step (410) on its inner surface.

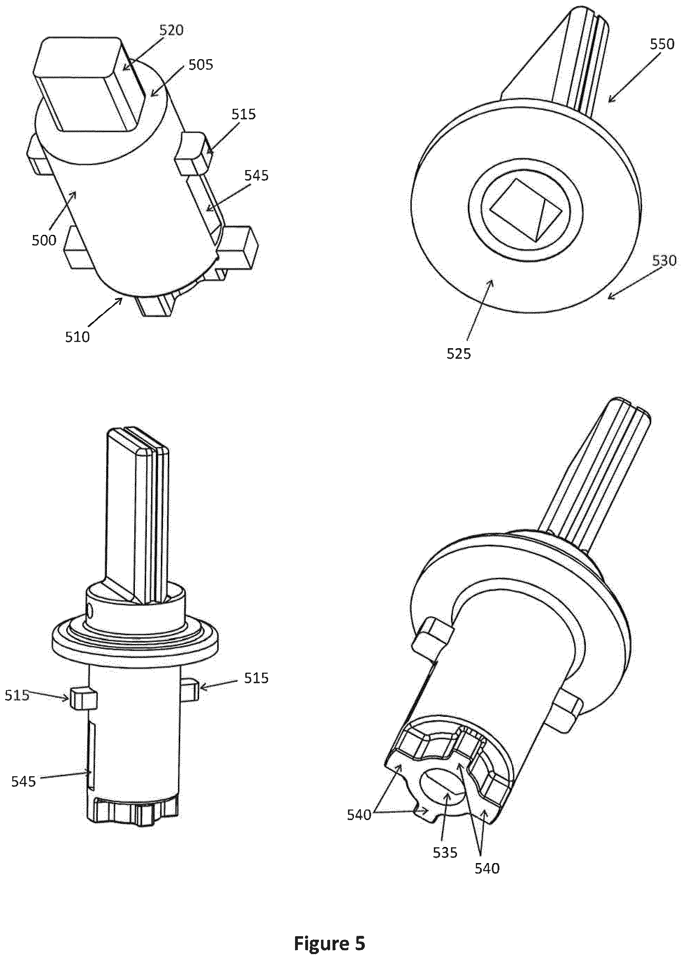

Figure 5, shows the rotor-knob assembly of the electronic lock unit according to the present invention.

As shown in figure 5, the rotor (500) comprises of a top end (505), a bottom end (510) and at least two sideward protruding arms (515) which are spaced apart. The top end (505) of the rotor (500) is provided with a protrusion (520) which is fixed inside a depression/cavity (525) provided in a bottom surface (530) of the knob (550). In other words, the knob (550) is rigidly fixed to the top end (505) of the rotor (500).

Further, as shown in figure 5, the bottom end (510) of the rotor (500) is provided with a hole (535) at its center and at least two protruding legs (540) spaced apart in radial direction from the hole (535).

Furthermore, the rotor (500) is provided with at least one groove (545) on its periphery.

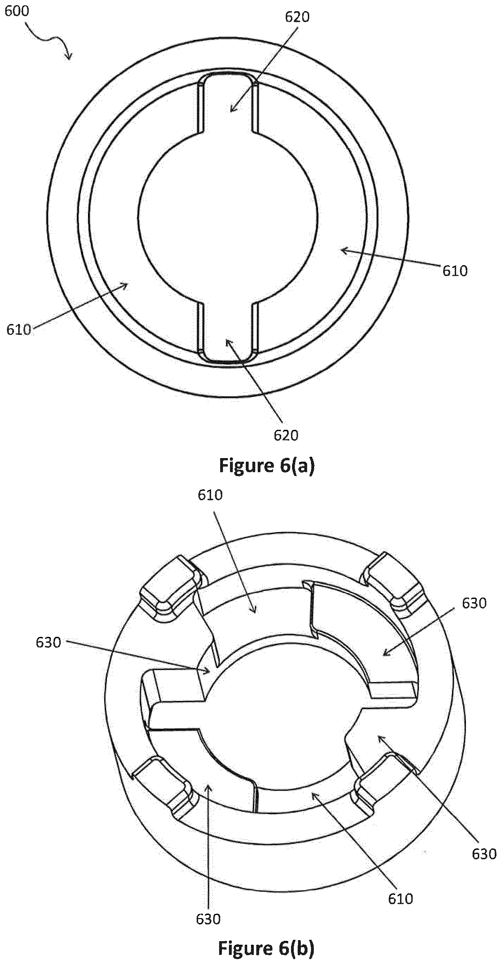

Figures 6a and 6b, shows the top surface and bottom surface of the ring of the electronic lock unit according to an embodiment of the present invention respectively.

As shown in figure 6a, the ring (600) is provided with at least two plates (610) protruding from inner circumference of the ring (600), the plates (610) being spaced apart so as to form a slot (620) between any two adjacent plates (610).

Further, as shown in figure 6b, the bottom side of each plate (610) is provided with projections (630) to engage the arms (515) of the rotor (500) within the said projections (630).

As evidenced from figures 2, 9 and 10, the ring rests on the top surface (310) of the housing in such a manner that the ring is sandwiched between the top surface (310) of the housing and the step (410) on the inner surface of the cover (400).
The ring (600) when sandwiched between the top surface (310) of the housing and the step (410) on the inner surface of the cover (400) allows the rotor (500) and its protruding arms (515) to pass through the opening (350) provided in the top surface (310) of the housing.

It is to be noted that, the projections (630) define the movement i.e. rotation of the knob from: steering LOCK to ignition OFF, ignition OFF to ignition ON and vice versa.

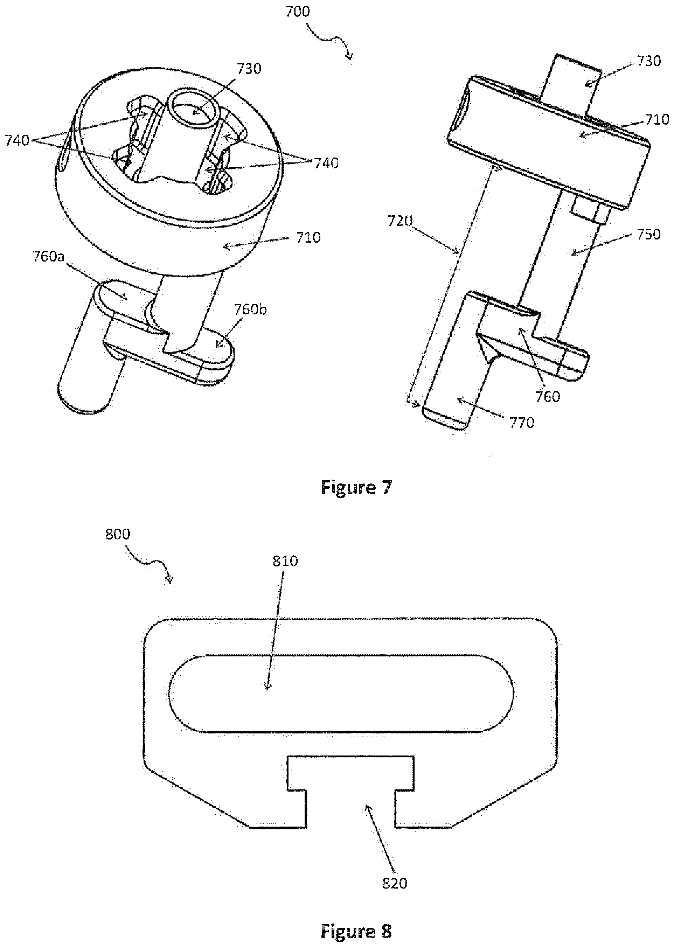

Figure 7, shows the cam unit or cam assembly of the electronic lock unit according to an embodiment of the present invention.

As shown in figure 7, the cam unit (700) comprises of a cylindrical body (710) and a cam element (720) rigidly connected to the cylindrical body (710). The cylindrical body (710) is also termed as cam cavity and makes contact with the rotor (500). The cylindrical body (710) is provided with a vertical pillar (730) protruding from its center and at least two slots (740) in the radial direction from the vertical pillar (730). The said vertical pillar (730) is provided with a spring means located on its top surface.

It is to be noted that when the cylindrical body (710) makes contact/engagement with the rotor (500) (i.e. when the movable stopper (240) is pulled back by the plunger), the vertical pillar (730) mates with the central hole (535) of the rotor (500) and the at least two slots (740) mate with the at least two legs (540) of the rotor (500).

The cam element (720) is constituted of a first pillar (750) rigidly fixed to the bottom of the cylindrical body (710) and L shaped member connected to the first pillar (750). The first pillar (750) is offset from the center of the cylindrical body (710).

The L shaped member is divided into a horizontal portion (760) and a vertical portion (770). As shown in figure 7, the first pillar (750) divides the horizontal potion (760) into substantially two equal sections (760a, 760b).

Figure 8, shows the cam follower of the electronic lock unit according to an embodiment of the present invention.

As shown in figure 8, the cam follower (800) comprises of a channel (810) and a T shaped groove (820) located at its circumference. The channel (810) accommodates the cam element (720) and allows rotation of the first pillar (750) of the cam element (720). The T shaped groove (820) accommodates one end of the locking bar/member (255) such that the locking member (255) moves with the movement of the cam follower (800). The said arrangement converts rotation of the cam element (720) into linear to and fro motion of the locking bar/member (255) for engaging/disengaging with the steering of the vehicle.

Furthermore, as shown in figures 3, 9, 10 and 12, the opening (350) in the top surface (310) of the housing (300) is provided with at least one spring loaded ball (275) which engages with the at least one groove (545) provided on the periphery of the rotor (500). The said arrangement enables the user to correctly identify the steering LOCK position i.e. the position where the user has to press the knob (550).

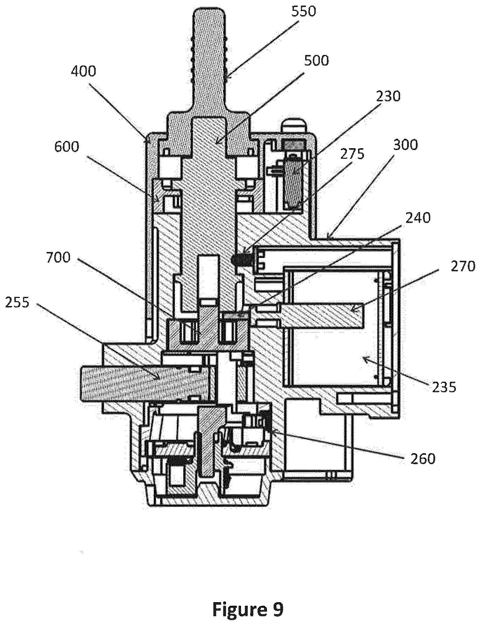

Figures 9-12 illustrate the cross sectional views of the electronic lock unit according to an embodiment of the present invention.

The lock unit of the present invention works in conjunction with the electronic control unit (150, 265) which receives signals from an electronic key or FOB key for facilitating steering LOCK/UNLOCK and ignition ON/OFF of the vehicle. The key may be a battery operated key and is held by the user of the vehicle. The present invention implies that the users need not insert the key in the lock for steering LOCK/UNLOCK and engine ON/OFF of the vehicle.

Further, the lock unit of the present invention allows multilevel authentication process/methodology to run which permit steering UNLOCK and engine ON of the vehicle. The first level of authentication allows steering UNLOCK of the vehicle and the second level of authentication allows ignition ON of the vehicle. The user having the electronic key or FOB key must remain in a predetermined distance of the vehicle for the authentication process to complete successfully.

The electronic key or FOB key is pre-programmed with specific ID codes which are transmitted continuously. Generally, the electronic control unit (150, 265) is in sleep mode (for instance when the vehicle is not in use) and is not able to detect the ID codes transmitted by the electronic key. The electronic control unit (150, 265) comes in active mode when a trigger signal is provided to the same.

According to an embodiment of the present invention, the trigger signal is provided by the first switch (230). The first switch (230) is provided either on the lock unit or at any place on the steering of the vehicle. The first switch (230) is actuated by the user of the vehicle. The actuation of the first switch (230) provides a trigger signal to the electronic control unit (150, 265) and initiates the multilevel authentication. In other words, the electronic control unit (150, 265) comes in active mode when a trigger signal is provided to it.

After the electronic control unit (150, 265) is in active mode, it receives ID codes transmitted by the electronic key and compares the received ID codes with ID coded stored in it. If the ID codes received by the electronic control unit (150, 265) matches with the ID codes previously stored in it, first level of authentication is said to be complete.

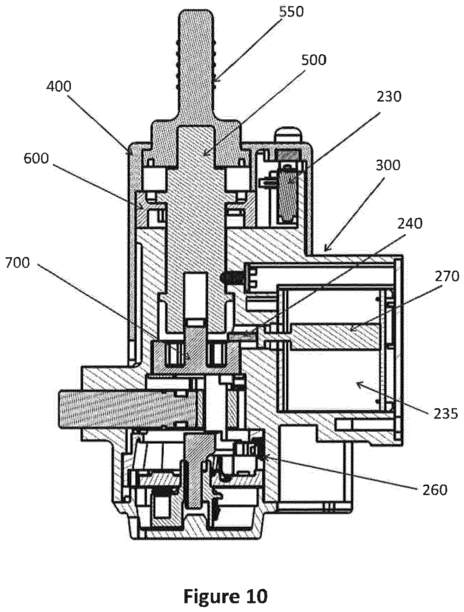

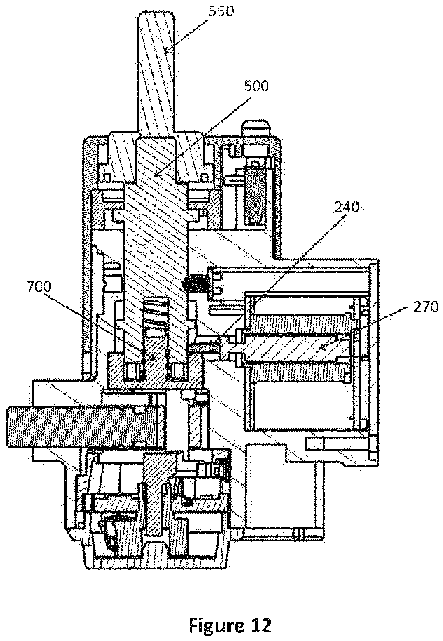

Further, when the first level of authentication is complete, the electronic control unit (150, 265) provides an electric pulse to the actuator unit (235). On receiving the electrical pulse, the plunger (270) of the actuator unit (235) is pulled back. More specifically, the movable stopper (240) provided between the bottom surface of the rotor (500) and the cylindrical body (710) is pulled backward for allowing the rotor (500) to engage with the cam unit (700), as shown in figures 10 and 12.

In other words, the movable stopper (240) prohibiting the engagement between the rotor (500) and the cam unit (700) as shown in figure 9 is pulled backward for allowing the rotor (500) to engage with the cam unit (700).

After the movable stopper (240) is pulled backward, the user is able to push the knob (550). More specifically, the user is able to push the knob-rotor assembly. The knob-rotor assembly is pushed if the arms (515) of the rotor match with the slots (620) of the ring (600) thereby allowing the rotor (500) to pass through the opening (350) in the top surface (310) of the housing (300). The pushing of the knob (550) establishes the engagement between the rotor (500) and the cam unit (700) as shown in figures 10 and 12.
Further, when the rotor (500) is engaged with the cam unit (700), the central hole (535) of the rotor (500) mates with the vertical pillar (730) of the cylindrical body (710) thereby energizing the spring means and the at least two legs (540) of the rotor (500) mate with the at least two slots (740) provided in the cylindrical body (710).

After, engagement of the rotor (500) with the cam unit (700), the user is able to rotate the knob (550) from steering LOCK to engine OFF position. The rotation of the knob (550) from steering LOCK to engine OFF is defined by the projections (630) of the ring (600).

The rotation of the knob (550) from steering LOCK to engine OFF position causes rotation of the cam element (720) due to the engagement of the rotor (500) with the cam unit (700). As defined above with reference to figure 8, the cam follower (800) accommodates the cam element (720) which is divided into first pillar (750) and L shaped member. The first pillar (750) being offset from the center of the cylindrical body (710) converts the rotation of the cam unit (700) into linear to and fro motion of the cam follower (800). Further, as defined above, the cam follower (800) is engaged with the locking bar/member (255). Thus, rotation of cam unit (700) (in response to rotation of the knob (550) from steering LOCK to engine OFF) causes linear motion of the locking bar/member (255) for releasing the steering of the vehicle.

The locking bar/member (255) holds the steering in the LOCK position. In the embodiment of figures 9-12, the locking bar (255) is moved inwards in response to the rotation of the knob (550) from steering LOCK to engine OFF, thereby unlocking or releasing the steering to move freely. The vehicle is now in engine OFF position.

After the vehicle is in engine OFF position, the user can further rotate the knob (550) to start the vehicle, i.e. the user can rotate the knob (550) from engine OFF to engine ON position. The rotation of the knob (550) from engine OFF to engine ON position is defined by the projections (630) of the ring (600).

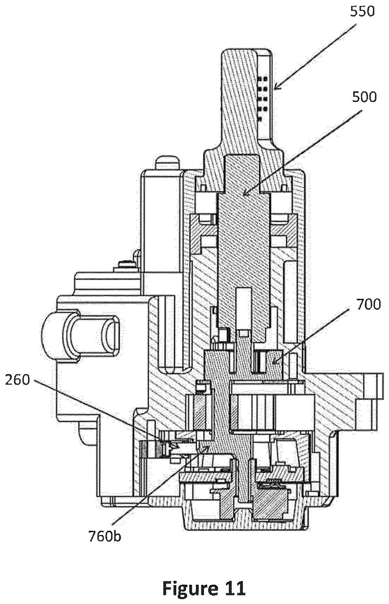

When the knob (550) is rotated from engine OFF to engine ON position, the horizontal portion (760) of the cam element (720) actuates the second micro switch (260). More specifically, one of the sections of the horizontal portion (760) of the cam element (720) actuates the second micro switch (260). With reference to figures 6 and 11, section (760b) actuates the second micro switch (260).

The actuation of the second micro switch (260) sends a trigger signal to the electronic control unit (150, 265) which initiates the second level of authentication. During the second level of authentication, the electronic control unit (150, 265) again receives ID codes transmitted by the electronic key and compares the received ID codes with ID coded stored in it. If the ID codes received by the electronic control unit (150, 265) matches with the ID codes previously stored in it, second level of authentication is said to be complete. If the second level of authentication is complete or successful, the engine of the vehicle will start. If the second level of authentication fails the engine will not start.

In view of the above, if an unauthorized user i.e. a user having an incorrect FOB key operates the lock, he/she will not be able to start the vehicle as the first level of authentication will not complete. On the other hand, if an authorized user i.e. a user having a correct FOB key leaves the vehicle at engine OFF position, then also an unauthorized user will not be able to start the vehicle as the second level of authentication will not complete. The knob (550) is an integrated part of the lock unit which is free to rotate with the rotor (500) when an unauthorized user attempts to access the vehicle. The rotation is transferred to the cam unit (700) only in a condition when the authorized users operate the lock i.e. when the authentication process is completed. In this way, unauthorized users can only rotate the knob (550) but cannot operate the lock unit at steering LOCK position.

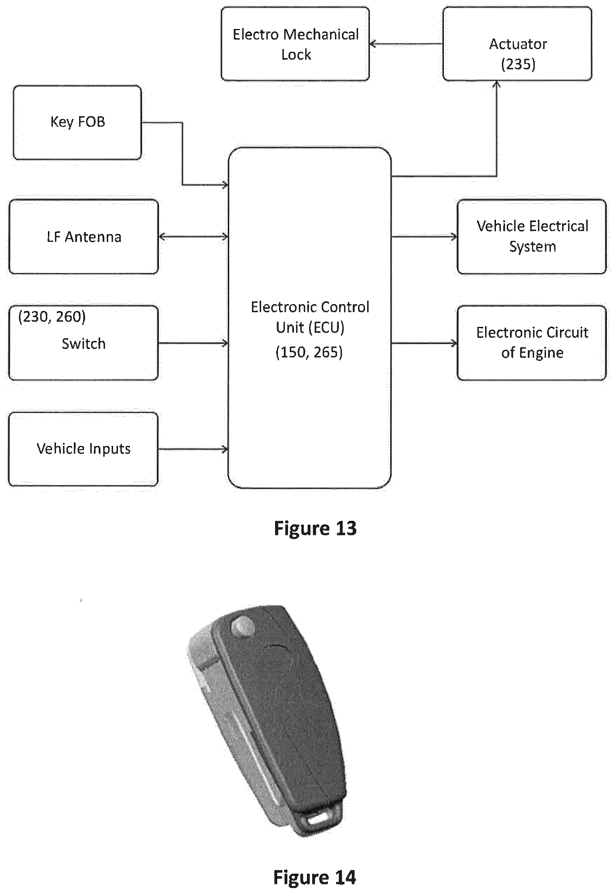

Figure 14, shows the electronic key. The electronic key may be provided with a spare key to operate other accessories in the vehicle (i.e. seat lock, tool box lock, etc.)

Figure 13, shows the block diagram of the electronic system of the lock unit according to an embodiment of the present invention.

As shown in figure 13, the electronic control unit (150, 265) receives ID codes from the FOB key for establishing the authentication process. In an embodiment of the present invention, the LF antenna which receives the ID codes may be an integral part of the electronic control unit (150, 265). In another embodiment, the LF antenna may be external to the electronic control unit (150, 265).

Further, it has been highlighted that the electronic control unit (150, 265) receives the trigger signals from the switches for initiating the multilevel authentication process. Furthermore, the electronic control unit (150, 265) receives input signals from other units of the vehicle.

Also, it has been highlighted that, the electronic control unit (150, 265) provides an output in the form of electrical pulses to the actuator unit (235) for retracting the stopper (240). Moreover, the electronic control unit (150, 265) provides output signals to the vehicle electrical system and electronic circuit of the engine.
The present invention is described with reference to the figures and specific embodiments; this description is not meant to be construed in a limiting sense. Various alternate embodiments of the invention will become apparent to persons skilled in the art upon reference to the description of the invention.

## Claims

1. An electronic lock unit (100, 200) for a vehicle comprising multilevel authentication, said electronic lock unit (100, 200) comprising:
an electronic control unit (150, 265);
a first switch (140, 230) operatively coupled to the electronic control unit (150) for initiating first level of authentication;
a rotor (215, 500) having a top end (505), a bottom end (510) and at least two sideward protruding arms (515) which are spaced apart;
a knob (130, 220, 550) rigidly fixed to the top end (505) of the rotor (215, 500) for facilitating steering LOCK/UNLOCK and ignition ON/OFF of the vehicle;
a ring (225, 600) having at least two plates (610) protruding from inner circumference of the ring (225, 600), the plates (610) being spaced apart so as to form a slot (620) between any two adjacent plates (610) to allow the rotor (215, 500) and its protruding arms (515) to pass through;
the bottom side of each plate (610) being provided with projections (630) to engage the arms (515) of the rotor (215, 500) within the said projections (630);
a cam unit (245, 700) comprising:
a cylindrical body (710) which mates with the bottom end (510) of the rotor (215, 500); and
a cam element (720) rigidly connected to the cylindrical body (710);
a movable stopper (240) positioned between the bottom end (510) of the rotor (215, 500) and the cylindrical body (710) for separating the rotor (215, 500) from the cam unit (245, 700); and
a second switch (260) operatively coupled to the electronic control unit (150, 265) and being actuated by the movement of the cam element (720) for initiating second level of authentication;wherein the first switch (140, 230) is actuated by a user, the first level of authentication allowing steering UNLOCK of the vehicle, the second level of authentication allowing ignition ON of the vehicle, wherein:
the electronic control unit (150, 265) is configured to:
receive ID codes transmitted by an electronic key; and
compare the received ID codes with ID codes stored in it,
wherein the first level of authentication is said to be complete if the ID codes received by the electronic control unit (150, 265)matches with the ID codes stored in it;
wherein the cam element (720) comprises:
a first pillar (750) rigidly fixed to the bottom of the cylindrical body and being offset from its center; and
an L shaped member having a horizontal (760) and a vertical portion, wherein the first pillar (750) being rigidly fixed over the horizontal portion (760) such that the horizontal portion (760) is substantially divided into two equal sections (760 a,b);
wherein one of the sections (760 a,b) of the horizontal portion (760) of the L shaped member actuates the second switch (260) and wherein the second level of authentication comprises:
the electronic control unit (150, 265) being configured to:
receive ID codes transmitted by the electronic key; and
compare the received ID codes with ID codes stored in it,
wherein the second level of authentication is said to be complete if the ID codes received by the electronic control unit (150, 265) matches with the ID codes stored in it.

2. The electronic lock unit as claimed in claim 1, wherein:
the top end of the rotor (215, 500) having a protrusion (520);
the bottom end of the rotor having a hole (535) at its center and at least two protruding legs (540) spaced apart in radial direction from the hole (535); and
the knob (550) having a circular bottom having a depression for accommodating the protrusion (520) of the rotor (215, 500).

3. The electronic lock unit as claimed in claims 1 and 2, wherein:
the cylindrical body (710) having a vertical pillar (730) protruding from its center to mate with the central hole (535) of the rotor (215, 500) and at least two slots (620) to accommodate the at least two legs (540) of the rotor (215, 500).

4. The electronic lock unit as claimed in claim 1, further comprising:
a housing (110, 205, 300) having a top surface (310), a bottom surface (320), a chamber (330) on a side and a hole (340) on another side, wherein the top and bottom surfaces (310, 320) are provided with openings (350).

5. The electronic lock unit as claimed in claim 4, further comprising:
an actuating unit (235) located in the chamber (330), said actuating unit (235) comprising:
a plunger connected to the movable stopper (240) for enabling push-pull movement of the stopper (240).

6. The electronic lock unit as claimed in claims 1 and 4, wherein the ring (225, 600) rests on the top surface (310) of the housing (110, 205, 300) and the rotor (215, 500) is encompassed by the opening (350) in the top surface (310).

7. The electronic lock unit as claimed in claim 6, further comprising:
a cover (210) for casing the top surface (310) of the housing (110, 205, 300), said cover (210) being provided with a step (410) on its inner surface,
wherein the ring (225, 600) is sandwiched between the top surface (310) of the housing and the step (410) on the inner surface of the cover (210).

8. The electronic lock unit as claimed in claim 1, further comprising:
a cam follower (250, 800) having a channel (810) for accommodating the cam element (720) and a T shaped groove (820) located at its circumference, said cam element (720) moving the cam follower (250, 800) to and fro in response to rotation of the knob (130, 550); and
a locking member (255) having an end connected to the T shaped groove (820) for moving to and fro for engaging/disengaging with the steering.

9. The electronic lock unit as claimed in claim 4, wherein the second switch (260) is placed in one of the corners (370) of the bottom surface (320) of the housing (110, 205, 300).

10. The electronic lock unit as claimed in claimed 4, wherein the opening (350) in the top surface (310) comprises at least one spring loaded ball (275) to engage with at least one groove (545) provided on the periphery of the rotor (215, 500).

## Patentansprüche

1. Elektronische Schlosseinheit (100, 200) für ein Fahrzeug mit einer mehrstufigen Authentifizierung, wobei die elektronische Schlosseinheit (100, 200) Folgendes aufweist:
eine elektronische Steuereinheit (150, 265);
einen ersten Schalter (140, 230), der arbeitsmäßig mit der elektronischen Steuereinheit (150) gekoppelt ist, um eine erste Stufe einer Authentifizierung einzuleiten;
einen Rotor (215, 500), der ein oberes Ende (505), ein unteres Ende (510) und wenigstens zwei seitlich hervorstehende Arme (515) aufweist, die voneinander beabstandet sind;
einen Knopf (130, 220, 550), der starr an dem oberen Ende (505) des Rotors (215, 500) befestigt ist, um ein Steuern von VERRIEGELN/ENTRIEGELN und Zündung EIN/AUS des Fahrzeugs zu erlauben;
einen Ring (225, 600), der wenigstens zwei Platten (610) aufweist, die von einem Innenumfang des Ring (225, 600) hervorstehen, wobei die Platten (610) voneinander entfernt sind, um so einen Schlitz (620) zwischen zwei benachbarten Platten (610) zu bilden, um es zu erlauben, dass der Rotor (215, 500) und seine hervorstehenden Arme (515) hier durchgelangen;
wobei die Bodenseite jeder Platte (610) mit Vorsprüngen (630) versehen ist, um an den Armen (515) des Rotors (215, 500) mit den beiden Vorsprüngen (630) anzugreifen;
eine Nockeneinheit (245, 700), die Folgendes aufweist:
einen zylindrischen Körper (710), der auf das untere Ende (510) des Rotors (215, 500) angepasst ist; und
ein Nockenelement (720), das starr mit dem zylindrischen Körper (710) verbunden ist;
einen beweglichen Stopper (240), der zwischen dem unteren Ende (510) des Rotors (215, 500) und dem zylindrischen Körper (710) positioniert ist, um den Rotor (215, 500) von der Nockeneinheit (245, 700) zu trennen; und
einen zweiten Schalter (260), der arbeitsmäßig mit der elektronischen Steuereinheit (150, 265) gekoppelt ist und durch die Bewegung des Nockenelementes (720) aktiviert wird, um eine zweite Stufe der Authentifizierung einzuleiten; wobei der erste Schalter (140, 230) von einem Benutzer aktiviert wird, die erste Stufe der Authentifizierung eine Steuerung des Fahrzeugs in ENTRIEGELN erlaubt, die zweite Stufe der Authentifizierung eine Schaltung der Zündung des Fahrzeugs auf EIN erlaubt, wobei:
die elektronische Steuereinheit (150, 265) dazu ausgebildet ist:
ID-Codes, die von einem elektronischen Schlüssel übertragen werden, zum empfangen; und
die erhaltenen ID-Codes mit darin gespeicherten ID-Codes zu vergleichen,
wobei die erste Stufe der Authentifizierung als vollständig angesehen wird, falls die von der elektronischen Steuereinheit (150, 265) erhaltenen ID-Codes mit den darin gespeicherten ID-Codes übereinstimmen;
wobei das Nockenelement (720) Folgendes aufweist:
eine erste Säule (750), die starr an dem Boden des zylindrischen Körpers befestigt ist und gegenüber seinem Zentrum außermittig angeordnet ist; und
ein L-förmiges Element, das einen horizontalen (760) und einen vertikalen Abschnitt aufweist, wobei die erste Säule (750) starr über dem horizontalen Abschnitt (760) derart angeordnet ist, dass der horizontale Abschnitt (760) im Wesentlichen in zwei gleiche Abschnitte (760 a,b) aufgeteilt ist;
wobei einer der Abschnitte (760 a,b) des horizontalen Abschnitts (760) des L-förmigen Elementes den zweiten Schalter (260) aktiviert, und wobei die zweite Stufe der Authentifizierung Folgendes aufweist:
dass die elektronische Steuereinheit (150, 265) dazu ausgebildet ist:
von dem elektronischen Schlüssel übertragene ID-Codes zu empfangen; und
die erhaltenen ID-Codes mit darin gespeicherten ID-Codes zu vergleichen,
wobei die zweite Stufe der Authentifizierung als vollständig angesehen wird, falls die von der elektronische Steuereinheit (150, 265) erhaltenen ID-Codes mit den darin gespeicherten ID-Codes übereinstimmen.

2. Elektronische Schlosseinheit nach Anspruch 1, bei der:
das obere Ende des Rotors (215, 500) einen Vorsprung (520) aufweist;
das untere Ende des Rotors ein Loch (535) in seiner Mitte aufweist, sowie wenigstens zwei hervorstehende Arme (540), die in radialer Richtung von dem Loch (535) beabstandet sind; und
wobei der Knopf (550) einen kreisförmigen Boden mit einem Eindruck zur Aufnahme des Vorsprungs (520) des Rotors (215, 500) aufweist.

3. Elektronische Schlosseinheit nach Anspruch 1 und 2, bei der:
der zylindrische Körper (710) eine vertikale Säule (730) aufweist, die von seiner Mitte hervorsteht, um auf das mittige Loch (535) des Rotors (215, 500) angepasst zu sein, und wobei wenigstens zwei Schlitze (620) die wenigstens zwei Arme (540) des Rotors (215, 500) aufnehmen können.

4. Elektronische Schlosseinheit nach Anspruch 1, die ferner Folgendes aufweist:
ein Gehäuse (110, 205, 300) mit einer oberen Fläche (310), einer unteren Fläche (320), einer Kammer (330) auf einer Seite und einem Loch (340) auf einer anderen Seite, wobei die obere und die Fläche (310, 320) mit Öffnungen (350) versehen sind.

5. Elektronische Schlosseinheit nach Anspruch 4, die ferner Folgendes aufweist:
eine Aktivierungseinheit (235), die in der Kammer (330) vorgesehen ist, wobei die Aktivierungseinheit (235) Folgendes aufweist:
einen Stößel, der mit dem beweglichen Stopper (240) verbunden ist, um eine Drück-Zieh-Bewegung des Stoppers (240) zu erlauben.

6. Elektronische Schlosseinheit nach Anspruch 1 und 4, bei der der Ring (225, 600) auf der oberen Fläche (310) des Gehäuses (110, 205, 300) aufliegt, und wobei der Rotor (215, 500) von der Öffnung (350) in der oberen Fläche (310) umschlossen wird.

7. Elektronische Schlosseinheit nach Anspruch 6, die ferner Folgendes aufweist:
eine Abdeckung (210) zur Einhausung der oberen Fläche (310) des Gehäuses (110, 205, 300), wobei die Abdeckung (210) mit einer Stufe (410) auf ihrer inneren Oberfläche versehen ist,
wobei der Ring (225, 600) zwischen der oberen Fläche (310) des Gehäuses und der Stufe (410) auf der inneren Oberfläche der Abdeckung (210) beidseitig eingeschlossen ist.

8. Elektronische Schlosseinheit nach Anspruch 1, die ferner Folgendes aufweist:
einen Nocken-Folger (250, 800), der einen Kanal (810) aufweist, um das Nockenelement (720) und eine T-förmige Nut (820), die an ihrer Innenoberfläche vorgesehen ist, aufzunehmen, wobei das Nockenelement (720) den Nocken-Folger (250, 800) als Reaktion auf eine Drehung des Knopfes (130, 550) hin und her bewegt; und
ein Verriegelungselement (255), das an einem Ende mit der T-förmigen Nut (820) verbunden ist, um sich hin und her zu bewegen, um an der Steuerung anzugreifen/sich davon zu lösen.

9. Elektronische Schlosseinheit nach Anspruch 4, bei der der zweite Schalter (260) in einer der Ecken (370) der unteren Fläche (320) des Gehäuses (110, 205, 300) platziert ist.

10. Elektronische Schlosseinheit nach Anspruch 4, bei der die Öffnung (350) in der oberen Fläche (310) wenigstens eine federbelastete Kugel (275) aufweist, um in wenigsten eine Nut (545) einzugreifen, die am Umfang des Rotors (215, 500) vorgesehen ist.

## Revendications

1. Unité de verrouillage électronique (100, 200) pour un véhicule comprenant une authentification multiniveau, ladite unité de verrouillage électronique (100, 200) comprenant:
une unité de commande électronique (150, 265) ;
un premier commutateur (140, 230) couplé de manière fonctionnelle à l'unité de commande électronique (150) pour déclencher un premier niveau d'authentification ;
un rotor (215, 500) ayant une extrémité supérieure (505), une extrémité inférieure (510) et au moins deux bras saillants vers le côté (515) qui sont espacés ;
un bouton (130, 220, 550) fixé de manière rigide à l'extrémité supérieure (505) du rotor (215, 500) pour faciliter le VERROUILLAGE/DÉVERROUILLAGE de la serrure de blocage et L'ACTIVATION/LA DÉSACTIVATION de l'allumage du véhicule ;
une bague (225, 600) ayant au moins deux plaques (610) faisant saillie depuis la circonférence interne de la bague (225, 600), les plaques (610) étant espacées de sorte à former une fente (620) entre deux plaques quelconques adjacentes (610) pour permettre au rotor (215, 500) et à ses bras saillants (515) de passer à travers cette dernière ;
la face inférieure de chaque plaque (610) comportant des saillies (630) pour venir en prise avec les bras (515) du rotor (215, 500) dans lesdites saillies (630) ;
une unité de came (245, 700) comprenant :
un corps cylindrique (710) qui s'accouple avec l'extrémité inférieure (510) du rotor (215, 500) ; et
un élément de came (720) raccordé de manière rigide au corps cylindrique (710) ;
une butée mobile (240) positionnée entre l'extrémité inférieure (510) du rotor (215, 500) et le corps cylindrique (710) pour séparer le rotor (215, 500) de l'unité de came (245, 700) ; et
un second commutateur (260) couplé de manière fonctionnelle à l'unité de commande électronique (150, 265) et qui est actionné par le mouvement de l'élément de came (720) pour déclencher un second niveau d'authentification ; dans laquelle le premier commutateur (140, 230) est actionné par un utilisateur, le premier niveau d'authentification permettant un DÉVERROUILLAGE de la serrure de blocage du véhicule, le second niveau d'authentification permettant une ACTIVATION de l'allumage du véhicule, dans laquelle :
l'unité de commande électronique (150, 265) est configurée :
pour recevoir des codes d'identification (ID) transmis par une clé électronique ; et
pour comparer les codes d'identification reçus avec des codes d'identification stockés en son sein,
dans laquelle le premier niveau d'authentification est dit être achevé si les codes d'identification reçus par l'unité de commande électronique (150, 265) corresponde aux les codes d'identification stockés en son sein ;
dans laquelle l'élément de came (720) comprend :
un premier pilier (750) fixé de manière rigide à la partie inférieure du corps cylindrique et qui est décalé par rapport à son centre ; et
un élément en forme de L ayant une partie horizontale (760) et une partie verticale, dans laquelle le premier pilier (750) étant fixé de manière rigide sur la partie horizontale (760) de telle sorte que la partie horizontale (760) soit sensiblement divisée en deux sections égales (760a, 760b) ;
dans laquelle l'une des sections (760a, 760b) de la partie horizontale (760) de l'élément en forme de L actionne le second commutateur (260) et dans laquelle le second niveau d'authentification comprend :
l'unité de verrouillage électronique (150, 265) qui est configurée :
pour recevoir des codes d'identification transmis par la clé électronique ; et
pour comparer les codes d'identification reçus avec des codes d'identification stockés en son sein,
dans laquelle le second niveau d'authentification est dit être achevé si les codes d'identification reçus par l'unité de commande électronique (150, 265) correspond aux codes d'identification stockés en son sein.

2. Unité de verrouillage électronique selon la revendication 1, dans laquelle :
l'extrémité supérieure du rotor (215, 500) comporte une saillie (520) ;
l'extrémité inférieure du rotor comporte un trou (535) en son centre et au moins deux pattes saillantes (540) espacées dans une direction radiale depuis le trou (535) ; et
le bouton (550) comporte un fond circulaire ayant un creux pour loger la saillie (520) du rotor (215, 500).

3. Unité de verrouillage électronique selon les revendications 1 et 2, dans laquelle :
le corps cylindrique (710) comporte un pilier vertical (730) faisant saillie depuis son centre pour s'accoupler avec le trou central (535) du rotor (215, 500) et au moins deux fentes (620) pour loger les deux, ou plus, pattes (540) du rotor (215, 500).

4. Unité de verrouillage électronique selon la revendication 1, comprenant en outre :
un boîtier (110, 205, 300) ayant une surface supérieure (310), une surface inférieure (320), une chambre (330) sur un côté et un trou (340) sur un autre côté, dans laquelle les surfaces supérieure et inférieure (310, 320) sont pourvues d'ouvertures (350).

5. Unité de verrouillage électronique selon la revendication 4, comprenant en outre :
une unité d'actionnement (235) située dans la chambre (330), ladite unité d'actionnement (235) comprenant :
un piston plongeur raccordé à la butée mobile (240) pour permettre un mouvement de poussée-traction de la butée (240).

6. Unité de verrouillage électronique selon les revendications 1 et 4, dans laquelle la bague (225, 600) repose sur la surface supérieure (310) du boîtier (110, 205, 300) et le rotor (215, 500) est englobé dans l'ouverture (350) dans la surface supérieure (310).

7. Unité de verrouillage électronique selon la revendication 6, comprenant en outre :
un couvercle (210) pour couvrir la surface supérieure (310) du boîtier (110, 205, 300), ledit couvercle (210) étant pourvu d'une surépaisseur (410) sur sa surface interne,
dans laquelle la bague (225, 600) est prise en sandwich entre la surface supérieure (310) du boîtier et la surépaisseur (410) sur la surface interne du couvercle (210).

8. Unité de verrouillage électronique selon la revendication 1, comprenant en outre :
un galet de came (250, 800) ayant un canal (810) pour loger l'élément de came (720) et une rainure en forme de T (820) située sur sa circonférence, ledit élément de came (720) déplaçant le galet de came (250, 800) d'avant en arrière à la suite de la rotation du bouton (130, 550) ; et
un élément de verrouillage (255) ayant une extrémité raccordée à la rainure en forme de T (820) pour effectuer un mouvement d'avant en arrière pour venir en prise avec la serrure de blocage/pour se désolidariser de cette dernière.

9. Unité de verrouillage électronique selon la revendication 4, dans laquelle le second commutateur (260) est placé dans l'un des coins (370) de la surface inférieure (320) du boîtier (110, 205, 300).

10. Unité de verrouillage électronique selon la revendication 4, dans laquelle l'ouverture (350) dans la surface supérieure (310) comprend au moins une bille chargée sous l'action d'un ressort (275) pour venir en prise avec au moins une rainure (545) ménagée sur la périphérie du rotor (215, 500).
